# FASCICULE DE BREVET EUROPEEN

(11) **EP 2 914 998 B1**
(45) Date de publication et mention de la délivrance du brevet: **07.12.2016**
(21) Numéro de dépôt: 13795827.8
(22) Date de dépôt: 28.10.2013
(51) Int. Cl.: G02B 27/01, G03B 21/56, H04N 9/31, B32B 17/10, G02B 5/30, G03B 21/20, G03B 21/60

(54) **MÉTHODE DE MISE EN OEUVRE D'UN DISPOSITIF DE VISUALISATION D'UNE IMAGE RÉELLE**
VERFAHREN ZUR INSTALLIERUNG EINES GERÄTS ZUR ANZEIGE EINES REELLEN BILDES
METHOD OF SETTING A DEVICE FOR DISPLAYING A REAL IMAGE

(30) Priorité: 31.10.2012 FR 1260409
(43) Date de publication de la demande: 09.09.2015
(73) Titulaire: Saint-Gobain Glass France, 92400 Courbevoie (FR)
(72) Inventeur: LALUET, Jean-Yves, F-75019 Paris (FR); LECAMP, Guillaume, F-75018 Paris (FR)
(74) Mandataire: Saint-Gobain Recherche
(86) Numéro de dépôt international: PCT/FR2013/052565
(87) Numéro de publication internationale: WO 2014/068227

(56) Documents cités:
- EP-A1- 2 466 361
- WO-A1-2010/139889
- US-A1- 2005 174 635
- US-A1- 2008 018 641
- US-A1- 2010 214 194
- US-A1- 2010 254 019
- US-B2- 6 979 499

## Description

La présente invention se rapporte au domaine des systèmes de visualisation projetés sur des écrans du type transparent, en particulier les pare-brises automobile ou les vitrages pour bâtiment.

Tout particulièrement, même si elle n'y est pas limitée, la présente invention se rapporte au domaine des systèmes de visualisation d'images, par exemple les systèmes de visualisation dits tête haute, appelés HUD ou Head Up Display dans la technique. De tels systèmes de visualisation d'images sont utiles notamment dans les cockpits d'avion, les trains mais également aujourd'hui dans les véhicules automobiles des particuliers (voitures, camions, etc.). L'invention concerne en particulier les dispositifs d'affichage sur verre se caractérisant par la formation d'une image réelle à partir d'un projecteur laser.

Dans de tels systèmes, le vitrage est en général constitué d'une structure en sandwich, comprenant le plus simplement deux feuilles de matière résistante telles que des feuilles de verre. Les feuilles de matière résistante sont reliées entre elles par un feuillet intercalaire thermoformable comprenant ou constitué par le plus souvent du polyvinylbutyral (PVB).

De tels systèmes de visualisation tête haute, qui permettent d'afficher des informations projetées sur un vitrage qui se réfléchissent vers le conducteur ou l'observateur sont déjà connus. Ces systèmes permettent notamment d'informer le conducteur du véhicule sans que celui-ci éloigne son regard du champ de vision en avant du véhicule, ce qui permet d'accroître grandement la sécurité.

De la manière la plus ancienne, on obtient une telle image en projetant une information sur un pare-brise ayant une structure feuilletée, c'est à dire formée de deux feuilles de verre et d'un intercalaire en matière plastique. Le conducteur perçoit une image virtuelle qui se situe à une certaine distance derrière le pare-brise. Cependant le conducteur observe alors une image double: une première image réfléchie par la surface du pare-brise orientée vers l'intérieur de l'habitable et une seconde image par réflexion de la surface extérieure du pare-brise, ces deux images étant légèrement décalées l'une par rapport à l'autre. Ce décalage peut perturber la vision de l'information. Pour pallier ce problème, on peut citer la solution proposée dans le brevet US 5,013,134, dans lequel est décrit un système de visualisation tête haute utilisant un pare-brise feuilleté formé de deux feuilles de verre et d'un intercalaire en polyvinylbutyral (PVB) dont les deux faces extérieures ne sont pas parallèles mais en forme de coin, de sorte que l'image projetée par une source d'affichage et réfléchie par la face du pare-brise orientée vers l'habitacle soit pratiquement superposée à la même image provenant de la même source réfléchie par la face du pare-brise orientée vers l'extérieur. Pour supprimer l'image double, on réalise classiquement un vitrage feuilleté en forme de coin en utilisant une feuille intercalaire dont l'épaisseur décroît du bord supérieur du vitrage au bord inférieur. Cependant, il est nécessaire que le profil du PVB soit très régulier et ne présente pas de variations d'épaisseur, car ceux-ci se transmettent au cours de l'assemblage sur le pare-brise et conduisent à des variations locales d'angle. Selon un tel procédé, on cherche donc à maximiser la réflexion lumineuse à la surface du verre pour obtenir l'intensité maximale du signal projeté sur la surface du vitrage.

Alternativement, il est proposé dans le brevet US 6,979,499 B2 d'envoyer un faisceau incident, de longueur d'onde appropriée, sur des luminophores directement intégrés dans le vitrage, susceptibles de répondre à l'excitation par l'émission d'une radiation lumineuse dans le domaine de la lumière visible. De cette façon, une image réelle et non plus virtuelle, est formée directement sur le pare-brise. Cette image est en outre visible par tous les passagers du véhicule. Le brevet US 6,979,499 B2 décrit en particulier un vitrage feuilleté avec un feuillet intercalaire du type polyvinylbutyral (PVB) dont les deux faces extérieures sont parallèles et dans lequel une couche de luminophores additionnelle est incorporée. Les luminophores sont choisis en fonction de la longueur d'onde du rayonnement d'excitation incident. Cette longueur d'onde peut être dans le domaine de l'ultraviolet ou de l'IR. Les luminophores, sous cette radiation incidente, réémettent un rayonnement dans le domaine du visible. On parle alors de down conversion lorsque le rayonnement incident est l'UV et d'up conversion lorsque le rayonnement incident est l'IR. Une telle construction permet selon ce document de restituer directement sur le pare-brise ou le vitrage une image de n'importe quel objet. Selon cette divulgation, des matériaux luminophores sont déposés sur l'ensemble d'une surface principale d'un des feuillets constituant le vitrage feuilleté (PVB ou verre) sous la forme d'une couche continue comprenant plusieurs types de luminophores. L'image recherchée est obtenue par l'excitation sélective d'une aire déterminée de la couche de luminophore. La localisation de l'image et sa forme sont obtenues au moyen d'une source d'excitation pilotée et modulée par des moyens extérieurs.

Les expériences menées par le demandeur ont montré que de tels dispositifs HUD, incorporant des luminophores dans le vitrage assemblé, se caractérisent par une luminance trop faible sous une source d'excitation UV ou IR conventionnelle. Pour obtenir une luminance et donc une visibilité suffisante du signal projeté sur le pare-brise, notamment dans des conditions de fortes insolations, il est nécessaire d'utiliser des sources lumineuses non conventionnelles, c'est-à-dire générant des faisceaux de rayons concentrés du type laser ou diode électroluminescente.

On peut notamment utiliser des sources excitatrices générant une lumière UV concentrée et dirigée, délivrée par des sources plus spécifiques du type diode laser. Par concentré, il est entendu au sens de la présente description que la puissance surfacique, au niveau du vitrage, du faisceau issu de la source génératrice est supérieure à 120 mW.cm⁻² et de préférence comprise entre 200 mW.cm⁻² et 20 000 mW.cm⁻², voire comprise entre 500 mW.cm⁻² et 10 000 mW.cm⁻².

La demande WO2010/139889 décrit l'utilisation d'un matériau du type matériau luminophore du type hydroxytéréphthalate présentant une forte luminance assurée par un bon rendement quantique sous une excitation UV incidente et une bonne durabilité aux tests de vieillissement sous excitation laser UV.

Cependant, l'utilisation de telles sources ne peut être envisagée qu'à des puissances qui restent plafonnées, afin d'éviter les problèmes liés à la dangerosité du faisceau, dans un premier temps à l'extérieur du véhicule. En particulier, en travaillant avec une longueur d'onde de l'ordre de 400 nm, on peut éviter le passage de la majeure partie du rayonnement laser vers l'extérieur car à ces longueurs d'onde le PVB absorbe fortement le rayonnement UV.

Cependant la puissance du rayonnement laser lumineux incident peut être également très dangereuse pour les passagers présents dans l'habitacle, en particulier pour le conducteur du véhicule, du fait de la réflexion se produisant sur les surfaces verrières du vitrage formant le pare-brise. Une telle réflexion fait courir un risque de lésion oculaire et de brûlure aux occupants du véhicule. Cette réflexion est en première approximation relativement élevée (de l'ordre de quelques pourcents) si l'on tient compte en outre de la courbure et l'inclinaison d'un pare-brise par exemple.

Ce danger est d'autant plus important que la source lumineuse doit émettre un rayonnement initial très puissant pour que le conducteur puisse percevoir l'information avec un contraste suffisant pour être lue très rapidement.

La présente invention se rapporte à une méthode permettant d'assurer la sécurité des passagers, en limitant sensiblement la réflexion du rayonnement incident sur la surface verrière.

En particulier, il a été trouvé par la société déposante qu'une telle sécurisation du système pouvait être obtenue en agissant sur un ensemble de paramètres parmi lesquels au moins :
- la nature du faisceau incident et en particulier sa polarisation,
- l'ouverture angulaire du faisceau incident,
- le rayon de courbure du pare-brise et son inclinaison dans la zone illuminée par le faisceau,
La prise en compte de ces paramètres selon la méthode selon la présente invention permet en particulier de déterminer le positionnement optimal de la source dans l'habitacle et vis-à-vis de la zone du pare-brise dans laquelle l'information doit être visualisée, afin de résoudre efficacement les problèmes de sécurité évoqués précédemment.

Plus précisément, la présente invention se rapporte à une méthode de mise en oeuvre d'un dispositif de visualisation tête haute (HUD) dans un habitacle comprenant un vitrage notamment feuilleté, ledit dispositif comprenant une source émettant un faisceau d'un rayonnement du type laser UV-visible ou IR ou du type diode électroluminescente, dirigé vers une portion dudit vitrage comprenant un luminophore absorbant ledit rayonnement pour réémettre une lumière dans le domaine du visible, l'illumination de ladite portion par le faisceau permettant la visualisation d'une image réelle sur le vitrage, ladite méthode étant caractérisée en ce qu'elle comprend les étapes suivantes :
- on répertorie dans l'habitacle l'ensemble des positions i_{[1 ;n]} où la source peut être mise en place,
- depuis un premier positionnement i₁ de la source dans l'habitacle, on émet depuis celui-ci un faisceau incident polarisé de telle façon que son champ électromagnétique soit transverse magnétique,
- pour l'ensemble de la portion du vitrage illuminé par le faisceau, on mesure les variations de l'angle d'incidence θ₁ et on détermine une valeur de l'angle θ_{1(Rmax)}, pour laquelle la réflexion R₁ₘₐₓ du rayonnement incident par le vitrage est maximale dans ladite zone illuminée et pour le positionnement i₁ de la source,
- depuis un deuxième positionnement i₂ de la source dont le rayonnement est dirigé pour illuminer sensiblement la même portion dudit vitrage, on procède comme dans les deux étapes précédentes, de manière à déterminer une valeur θ_{2(Rmax)}, pour laquelle la réflexion R₂ₘₐₓ du rayonnement incident par le vitrage est maximale dans ladite zone illuminée et pour le positionnement i₂ de la source,
- on procède ainsi pour l'ensemble des positionnements possibles iₙ de la source,
- on dispose finalement la source sur la position i pour laquelle la valeur Rᵢₘₐₓ ainsi déterminée est minimale.

Selon certains modes de réalisations avantageux de la présente méthode qui le cas échéant peuvent bien évidemment être combinés entre eux :
- La source génère un rayonnement laser UV-visible compris entre 380 et 410 nm, de préférence égal à 405 nm.
- La source est un dispositif générant un rayonnement laser UV sur une demi-ouverture angulaire γ_{1/2} compris entre 5 et 25°, de préférence entre 10 et 20, permettant l'illumination de la portion du vitrage utilisée pour la visualisation de l'image.
- Le dispositif est choisi dans le groupe constitué par : les projecteurs à base de micro-miroir MEMS avec une source laser, les projecteurs à base de matrices DLP, LCD ou LCOS avec une source laser ou LED, les projecteurs à base de miroirs montés sur des galvanomètres réfléchissants une source laser.
- Ledit vitrage est un vitrage feuilleté du type pare-brise pour automobile ou vitrage pour bâtiment, comprenant un assemblage d'au moins deux feuilles transparentes de verre inorganique ou d'une matière organique résistante, reliées entre elles par un intercalaire d'une matière thermoformable ou par des feuillets multicouches incorporant un tel intercalaire, ledit vitrage étant caractérisé en qu'un matériau luminophore est intégré dans ledit intercalaire, permettant ladite visualisation.
- La matière thermoformable constituant ledit intercalaire est choisie dans le groupe des PVB, des PVC plastifiés, du polyuréthane PU ou des éthylènes vinyle acétate EVA.
- Ledit luminophore est un hydroxyalkyltéréphthalate R-OOC-φ(OH)ₓ-COOR, de formule développée : 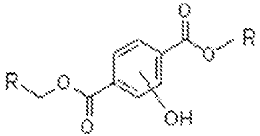
dans laquelle φ désigne un noyau benzénique substitué par au moins un groupement hydroxy (OH), R est une chaine hydrocarbonée comprenant de 1 à 10 atomes et x est égal à 1 ou 2, en particulier le diéthyl-2,5-dihydroxytéréphthalate.

La présente invention se rapporte également à un habitacle de véhicule automobile comprenant un dispositif de visualisation tête haute (HUD) et un vitrage notamment feuilleté, ledit dispositif comprenant une source émettant un faisceau d'un rayonnement concentré et directionnel du type laser dirigé vers une portion dudit vitrage comprenant un luminophore absorbant ledit rayonnement et réémettant une lumière dans le domaine du visible, l'illumination de ladite portion par le faisceau permettant la visualisation d'une image réelle sur ledit vitrage, dans lequel ladite source est positionnée dans l'habitacle par application de la méthode telle que précédemment décrite.

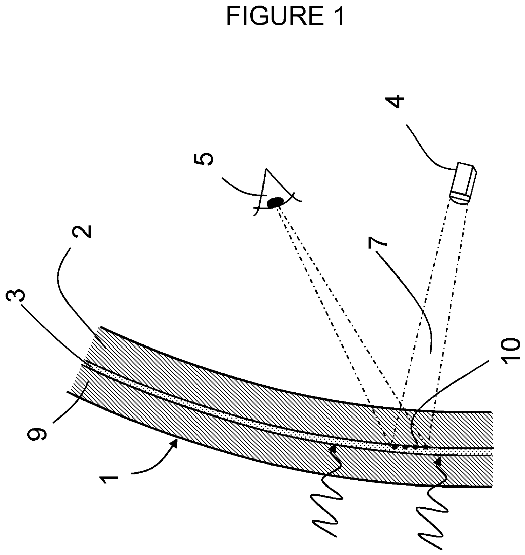

L'invention et ses avantages seront mieux compris à la lecture du mode de réalisation de l'invention qui suit, en relation avec la figure 1 ci- jointe.

Sur cette figure 1, on a schématisé un pare-brise et un dispositif disposé dans un habitacle d'un véhicule automobile (non représenté) :

Le pare-brise 1 se compose de deux feuilles 2 et 9 typiquement en verre mais qui pourraient également être constituées de feuillets de matière plastique résistante du type polycarbonate. Entre les deux feuillets, est présent un feuillet intercalaire plastique 3 tel que du PVB (polyvinylbutyral), du PVC plastifié, PU ou EVA ou bien encore un feuillet thermoplastique multicouche incorporant par exemple du PET (polyéthylène téréphtalate), dont la succession des couches est par exemple PVB/PET/PVB.

Sur au-moins une partie de la face interne du feuillet thermoplastique intercalaire 3 ont été déposées avant feuilletage, c'est-à-dire avant l'assemblage des différents feuillets, des particules de luminophore organique du type téréphtalate selon l'invention.

Les particules de luminophore présentent une répartition de taille majoritairement comprise entre 1 et 100 microns. Par majoritairement il est entendu que plus de 90% des particules composant la poudre commerciale ont un diamètre compris entre 1 et 100 microns. De manière préférée, les particules de luminophore du type téréphtalate subissent un traitement préalable favorisant leur imprégnation dans le feuillet thermoplastique de PVB. Plus précisément, les particules sont préalablement enrobées dans un liant à base de PVB.

Une source laser 4 émettant un rayonnement lumineux d'excitation est utilisée pour envoyer un rayonnement concentré incident 7 de longueur d'onde égale à 405 nm vers une portion 10 du pare-brise sur laquelle l'image réelle doit être générée, au moins cette portion du vitrage comprenant un luminophore adapté. Le luminophore est avantageusement du type hydrotéréphthalate tel que décrit dans la demande WO2010/139889, par exemple solvaté sous forme moléculaire dans le feuillet thermoplastique intercalaire 3. Le luminophore présente un fort coefficient d'absorption du rayonnement incident. Il réémet ensuite un rayonnement dans le domaine visible, c'est-à-dire un rayonnement proche de 450 nm avec un rendement supérieur à 80%. Avantageusement, le projecteur laser comprend en outre un polariseur permettant de polariser le faisceau incident, en particulier de telle façon que son champ électromagnétique soit transverse magnétique.

Au sens de la présente invention, on entend par transverse magnétique un rapport des polarisations TM:TE d'au moins 100:10, de préférence d'au moins 100:1.

Le rayonnement visible émis par le luminophore est alors directement observable par l'oeil 5 du conducteur, qui visualise ainsi l'objet sur le pare-brise sans avoir à quitter la route des yeux. De cette façon, une image peut être directement matérialisée sur un pare-brise feuilleté sans nécessiter d'adapter la structure de celui-ci, par exemple l'épaisseur du feuillet intercalaire, ce qui permet une fabrication économique des systèmes HUD.

Selon l'invention, la source utilisée pour générer le rayonnement concentré est de préférence une source du type UV laser. Elle est par exemple mais non limitativement du type laser à solide, diode laser à semi-conducteurs, lasers à gaz, lasers à colorant, laser à excimère. De manière générale toute source connue générant un flux concentré et dirigé, au sens de la présente invention, d'un rayonnement UV peut être utilisée comme source d'excitation selon l'invention. Alternativement, les sources de lumière incohérente telles que les diodes électroluminescentes peuvent aussi être utilisées, de préférence de puissance et dans le domaine du proche UV.

Selon un mode possible de réalisation, il est possible d'utiliser un projecteur DLP pour moduler l'onde excitatrice selon le mode décrit dans la demande US 2005/231652, paragraphe [0021]. Il est également possible selon l'invention d'utiliser comme source d'excitation UV un dispositif tel que décrit dans la demande US2004/0232826, notamment tel que décrit en connexion avec la figure 3.

L'utilisation de tels systèmes permet d'illuminer des portions spécifiques du vitrage par le rayonnement laser, pour y faire apparaître toute information utile au conducteur dans sa conduite, notamment pour sa sécurité, ou encore pour se diriger.
Le mode de réalisation qui précède n'est bien évidemment en aucune façon limitatif de la présente invention, sous aucun des aspects précédemment décrits.

Selon l'invention, l'illumination de la zone considérée peut être obtenue par un dispositif fonctionnement par balayage rapide de ladite zone par la source ou par activation simultanée de pixels dans ladite zone au moyen d'une pluralité de miroirs soumis à ladite source.

En particulier, selon un premier mode, on utilisera un projecteur à base de micro-miroir MEMS avec une source laser. Selon un autre mode, on utilisera les projecteurs à base de matrices DLP, LCD ou LCOS avec une source laser ou LED. Alternativement il est possible selon l'invention d'utiliser un projecteur à base de miroirs montés sur des galvanomètres réfléchissants une source laser.

Dans l'habitacle d'un tel véhicule et sa sécurité lors que le dispositif est en fonctionnement, la principale difficulté réside dans la partie réfléchie du rayonnement sur la surface du pare brise qui peut être, en première approximation, relativement élevée et dirigée vers les yeux des passagers, en tenant compte notamment de l'inclinaison et de la courbure du pare-brise feuilleté dans la zone illuminée par le faisceau incident.

Selon l'invention, la source, par exemple de type UV laser, est disposée dans l'habitacle par application de la méthode selon la présente invention, de manière à minimiser la réflexion du rayonnement incident sur la paroi intérieure du pare-brise vers l'habitacle.

A titre d'exemple, dans le cas d'un habitacle d'un véhicule automobile, le projecteur peut être mis en place à de nombreuses positions, mais le plus souvent au niveau du tableau de bord, au niveau du plafond du véhicule ou encore sur les montants du pare-brise, sans que cette liste soit cependant ainsi limitée. Pour un habitacle donné et en fonction de la portion du pare-brise sur laquelle la projection de l'image est désirée, il est ainsi possible de répertorier l'ensemble des positions où le projecteur peut être installé.

Les exemples qui suivent, basés sur la modélisation du mode de réalisation qui vient d'être décrit, montrent les avantages obtenus par la mise en oeuvre de la présente méthode lors du positionnement du projecteur laser dans le but de minimiser les risques précédemment décrits pour les passagers du véhicule, par une diminution sensible de la réflexion du faisceau issu de la source à la surface du pare-brise.

### Exemples:

Dans les présents exemples, on reproduit la réalisation décrite précédemment en relation avec la figure 1, dans lequel le pare-brise feuilleté 1 comprenant le luminophore est illuminé par la source ou projecteur 4 du rayonnement laser qui illumine (ou illumine) une portion 10 du vitrage.

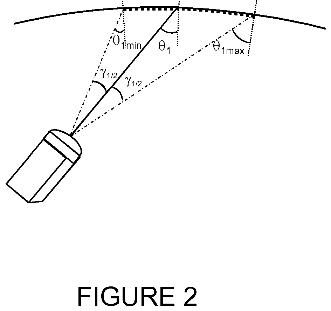

Sur la figure 2 ci-joint on a représenté différentes configurations possibles du positionnement du projecteur dans un unique plan vertical du pare brise, pour des raisons de simplicité (projection 1 D). Bien entendu, dans un cas réel, la zone illuminée comprendrait également une composante horizontale, non représentée ici.

On considère que le projecteur utilisé est un laser UV-visible dont le rayonnement est de 405 nm et qui présente par construction une demi-ouverture angulaire γ_{1/2} égale à 10°.
Par demi-ouverture angulaire, on entend au sens de la présente invention l'angle entre les rayons les plus divergents qui peuvent être émis par le projecteur et l'axe optique du projecteur.
Pour une première position, on dispose le dispositif dans une position 1 (figure 2), de façon à illuminer la zone 10 sur le pare-brise 1. Tel que représenté sur la figure 2 et au sens de la présente description, on définit l'angle d'incidence θ₁ comme l'angle entre le faisceau, lorsque celui est émis en position centrale du dispositif laser (c'est-à-dire suivant l'axe optique du projecteur) et la normale du vitrage au point d'incidence sur le vitrage, en tenant compte de la courbure et de l'inclinaison de celui-ci.
Pour chaque point ainsi illuminé, entre les intervalles θ₁ₘᵢₙ et θ₁max, correspondant aux angles d'ouverture limites du dispositif (c'est-à-dire respectivement - γ_{1/2} et + γ_{1/2} autour de la position centrale du faisceau), on détermine le pourcentage R de réflexion du rayonnement incident, par exemple selon les méthodes classiques de modélisation.

On détermine au final, pour cette première position, une valeur θ₁(_{Rmax}) et un R₁ₘₐₓ associé, correspondant à une valeur maximale de la réflexion de l'onde, lorsque :
- le rayonnement incident n'est pas polarisé (NP),
- le rayonnement incident est polarisé transverse électrique (TE),
- le rayonnement incident est polarisé transverse magnétique (TM).

On déplace ensuite le projecteur sur une autre position i₂ de telle manière que cette même zone 10 puisse être illuminée par le projecteur. Dans cette configuration, le faisceau arrive sur le vitrage avec un autre angle d'incidence égale à θ₂.

Comme pour la configuration précédente, pour chaque point ainsi balayé entre les intervalles θ₂ₘᵢₙ et θ₂ₘₐₓ, on détermine le pourcentage R de réflexion du rayonnement incident, ainsi qu'une valeur θ_{2(Rmax)} et un R₂ₘₐₓ associé en fonction de la polarisation de l'onde incidente.

Les principaux résultats obtenus en fonction de différentes positions calculées sont reportées dans le tableau 1 qui suit.

**Tableau 1**

| Angle 0ᵢ | Polarisation | Valeur maximum de la réflexion (Rᵢₘₐₓ) dans l'intervalle ± γ_{1/2} |
|---|---|---|
| 0° | TM | 4.54% |
| 0° | TE | 4.73% |
| 0° | NP | 4.55% |
| 20° | TM | 4.36% |
| 20° | TE | 6.50% |
| 20° | NP | 4.70% |
| 55° | TM | 1,16% |
| 55° | TE | 24.4% |
| 55° | NP | 12.8% |
| 60° | TM | 4.04% |

Les données reportées dans le tableau 1 montrent que le taux de réflexion peut être limité lorsque l'onde est polarisée transverse magnétique (TM) et lorsque l'angle d'incidence θ du faisceau sur le pare-brise est de l'ordre de 50°, en tenant compte de la courbure et de l'inclinaison de celui-ci et de l'ouverture angulaire de la source.

Dans une deuxième série d'expériences, on modifie la source de telle façon que sa demi-ouverture angulaire γ_{1/2} soit égale à 20°.

En procédant de la même façon que précédemment on détermine par application de la présente méthode l'angle optimal pour lequel la réflexion de l'onde incidente sur le pare brise est minimale. Les résultats obtenus et la comparaison avec l'exemple précédent sont reportés dans le tableau 2 qui suit :

**Tableau 2**

| Polarisation | Angle θ optimal | γ_{1/2} | Valeur maximum de la réflexion Rₘₐₓ dans l'intervalle θ ± γ_{1/2} |
|---|---|---|---|
| TM | 55° | 10° | 1,16% |
| Non polarisé | 0° | 10° | 4,55% |
| TM | 48° | 20° | 3,12% |
| Non polarisé | 0° | 20° | 4,57% |

L'analyse combinée des résultats reportés dans les tableaux 1 et 2 montrent qu'un positionnement optimal de la source peut être déterminé par application de la présente méthode, en fonction de la nature de l'habitacle, de la forme et du positionnement du pare-brise, sur la base des principes et des paramètres précédemment exposés.

## Revendications

1. Méthode de mise en ouvre d'un dispositif de visualisation d'une image réelle sur un vitrage (1) équipant un habitacle, ledit dispositif comprenant une source (4) émettant un faisceau d'un rayonnement (7) du type laser UV-visible ou IR ou du type diode électroluminescente, dirigé vers une portion dudit vitrage comprenant un luminophore absorbant ledit rayonnement pour réémettre une lumière dans le domaine du visible, l'illumination de ladite portion par le faisceau permettant la visualisation de l'image sur le vitrage, ladite méthode étant **caractérisée en ce qu'**elle comprend les étapes suivantes :
- on répertorie dans l'habitacle l'ensemble des positions i_{[1 ;n]} où la source peut être mise en place,
- depuis un premier positionnement i₁ de la source dans l'habitacle, on émet depuis celui-ci un faisceau incident polarisé de telle façon que son champ électromagnétique soit transverse magnétique,
- pour l'ensemble de la portion du vitrage illuminé par le faisceau, on mesure les variations de l'angle d'incidence θ₁ et on détermine une valeur de l'angle θ_{1(Rmax)}, pour laquelle la réflexion R₁ₘₐₓ du rayonnement incident par le vitrage est maximale dans ladite zone illuminée et pour le positionnement i₁ de la source,
- depuis un deuxième positionnement i₂ de la source dont le rayonnement est dirigé pour illuminer sensiblement la même portion dudit vitrage, on procède comme dans les deux étapes précédentes, de manière à déterminer une valeur θ₂(_{Rmax}), pour laquelle la réflexion R₂ₘₐₓ du rayonnement incident par le vitrage est maximale dans ladite zone illuminée et pour le positionnement i₂ de la source,
- on procède ainsi pour l'ensemble des positionnements possibles iₙ de la source,
- on dispose finalement la source sur la position i pour laquelle la valeur Rᵢₘₐₓ ainsi déterminée est minimale.

2. Méthode selon la revendication 1, dans laquelle la source génère un rayonnement laser UV-visible compris entre 380 et 410 nm.

3. Méthode selon l'une des revendications 1 ou 2 dans laquelle la source est un dispositif générant un rayonnement laser UV sur une demi-ouverture angulaire γ_{1/2} compris entre 5 et 25°, de préférence entre 10 et 20, permettant l'illumination de la portion du vitrage utilisée pour la visualisation de l'image.

4. Méthode selon l'une des revendications précédentes, dans laquelle le dispositif est choisi dans le groupe constitué par : les projecteurs à base de micro-miroir MEMS avec une source laser, les projecteurs à base de matrices DLP, LCD ou LCOS avec une source laser ou LED, les projecteurs à base de miroirs montés sur des galvanomètres réfléchissants une source laser.

5. Méthode selon l'une des revendications précédentes, dans laquelle ledit vitrage (1) est un vitrage feuilleté du type pare-brise pour automobile, ou vitrage pour bâtiment, comprenant un assemblage d'au moins deux feuilles transparentes de verre (2, 9) inorganique ou d'une matière organique résistante, reliées entre elles par un intercalaire (3) d'une matière thermoformable ou par des feuillets multicouches incorporant un tel intercalaire, ledit vitrage étant caractérisé en qu'un matériau luminophore est intégré dans ledit intercalaire, permettant ladite visualisation.

6. Méthode selon l'une des revendications précédentes, dans lequel la matière thermoformable constituant ledit intercalaire est choisie dans le groupe des PVB, des PVC plastifiés, du polyuréthane PU ou des éthylènes vinyle acétate EVA.

7. Méthode selon l'une des revendications précédentes, dans laquelle dans lequel ledit luminophore est un hydroxyalkyltéréphthalate R-OOC-φ(OH)ₓ-COOR, de formule développée : 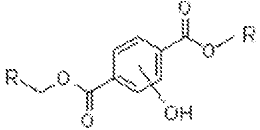 dans laquelle φ désigne un noyau benzénique substitué par au moins un groupement hydroxy (OH), R est une chaine hydrocarbonée comprenant de 1 à 10 atomes et x est égal à 1 ou 2.

8. Méthode selon la revendication précédente, dans lequel ledit luminophore est le diéthyl-2,5-dihydroxytéréphthalate.

9. Habitacle comprenant un dispositif de visualisation d'une image réelle sur un vitrage (1) ledit dispositif comprenant une source (4) émettant un faisceau d'un rayonnement (7) concentré et directionnel du type laser dirigé vers une portion dudit vitrage comprenant un luminophore absorbant ledit rayonnement et réémettant une lumière dans le domaine du visible, l'illumination de ladite portion par le faisceau permettant la visualisation d'une image réelle sur ledit vitrage, dans lequel ladite source est positionnée dans l'habitacle par application de la méthode selon l'une des revendications précédentes.

## Patentansprüche

1. Verfahren zur Implementierung einer Vorrichtung zum Anzeigen eines reellen Bildes auf einer Glasscheibe (1), mit der ein Fahrgastraum versehen ist, wobei die Vorrichtung eine Quelle (4) umfasst, die ein Strahlenbündel einer Strahlung (7) vom Typ Laser im UV-Spektralbereich-sichtbaren Spektralbereich oder IR-Spektralbereich oder vom Typ Leuchtdiode emittiert, das in Richtung eines Teils der Glasscheibe gerichtet ist, der einen Luminophor umfasst, der die Strahlung absorbiert, um ein Licht im sichtbaren Spektralbereich zu reemittieren, wobei die Beleuchtung des Teils durch das Strahlenbündel die Anzeige des Bildes auf der Glasscheibe ermöglicht, wobei das Verfahren **dadurch gekennzeichnet ist, dass** es die folgenden Schritte umfasst:
- in dem Fahrgastraum werden sämtliche Positionen i_{[1 ;n]} klassifiziert, wo die Quelle anordnet werden kann,
- von einer ersten Positionierung i₁ der Quelle in dem Fahrgastraum aus wird von dieser aus ein einfallendes Strahlenbündel emittiert, das so polarisiert ist, dass sein elektro-magnetisches Feld transversalmagnetisch ist,
- für den gesamten Teil der Glasscheibe, der durch das Strahlenbündel beleuchtet wird, werden die Veränderungen des Einfallwinkels θ₁ gemessen und ein Wert für den Winkel θ₁(Rₘₐₓ) ermittelt, bei dem die Reflexion R₁ₘₐₓ der durch die Glasscheibe ein-fallenden Strahlung in der beleuchteten Zone und bei der Positionierung i₁ der Quelle maximal ist,
- von einer zweiten Positionierung i₂ der Quelle aus, deren Strahlung so gerichtet wird, dass sie im Wesentlichen den gleichen Teil der Glasscheibe beleuchtet, wird wie in den zwei vorhergehenden Schritten derart verfahren, dass ein Wert θ₂(Rₘₐₓ) ermittelt wird. bei dem die Reflexion R₂ₘₐₓ der durch die Glasscheibe einfallenden Strahlung in der beleuchteten Zone und bei der Positionierung i₂ der Quelle maximal ist,
- auf diese Weise wird für sämtliche möglichen Positionierungen iₙ der Quelle verfahren,
- schließlich wird die Quelle in der Position i angeordnet, bei welcher der auf diese Weise ermittelte Wert Rᵢₘₐₓ minimal ist.

2. Verfahren nach Anspruch 1, bei dem die Quelle eine Laserstrahlung im UV-Spektralbereichsichtbaren Spektralbereich zwischen 380 und 410 nm erzeugt.

3. Verfahren nach einem der Ansprüche 1 oder 2, bei dem die Quelle eine Vorrichtung ist, die eine Laserstrahlung im UV-Spektralbereich über eine Halbwinkelöffnung γ_{1/2} zwischen 5 und 25°, bevorzugt zwischen 10 und 20, für die Beleuchtung des Teils der Glasscheibe erzeugt, der für die Anzeige des Bildes verwendet wird.

4. Verfahren nach einem der vorhergehenden Ansprüche, bei dem die Vorrichtung ausgewählt ist aus der Gruppe bestehend aus: den Projektoren auf Mikrospiegel-Basis MEMS mit einer Laserquelle, den Projektoren auf Matrix-Basis DLP, LCD oder LCOS mit einer Laser- oder LED-Quelle, den Projektoren auf Basis von Spiegeln, die auf Galvanometern montiert sind, die eine Laserquelle reflektieren.

5. Verfahren nach einem der vorhergehenden Ansprüche, bei dem die Glasscheibe (1) eine Verbundglasscheibe vom Typ Windschutzscheibe für Kraftfahrzeuge oder Glasscheibe für Gebäude ist, umfassend eine Anordnung aus mindestens zwei transparenten Scheiben (2, 9) aus anorganischem Glas oder aus einem widerstandsfähigen organischen Material, die durch eine Zwischenlage (3) aus einem thermoformbaren Material oder durch mehrschichtige Blätter, die eine derartige Zwischenlage umfassen, miteinander verbunden sind, wobei die Glasscheibe **dadurch gekennzeichnet ist, dass** ein luminophores Material in die Zwischenlage integriert ist und die Anzeige ermöglicht.

6. Verfahren nach einem der vorhergehenden Ansprüche, bei dem das thermoformbare Material, das die Zwischenlage bildet, aus der Gruppe der PVB, der Weich-PVC, Polyurethan (PU) oder der Ethylenvinylacetate EVA ausgewählt ist.

7. Verfahren nach einem der vorhergehenden Ansprüche, bei dem der Luminophor ein Hydroxyalktylterephtalat R-OOC-φ(OH)ₓ- COOR mit der Strukturformel 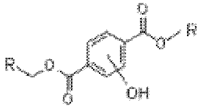 ist, wobei Φ einen Benzolkern, der durch mindestens eine Hydroxygruppe (OH) substituiert ist, bezeichnet, R eine Kohlenwasserstoffkette ist, die 1 bis 10 Atome umfasst und x gleich 1 oder 2 ist.

8. Verfahren nach dem vorhergehenden Anspruch, bei dem der Luminophor Diethyl-2,5-dihydroxyterephtalat ist.

9. Fahrgastraum umfassend eine Vorrichtung zum Anzeigen eines reellen Bildes auf einer Glasscheibe (1), wobei die Vorrichtung eine Quelle (4) umfasst, die ein konzentriertes und direktionales Strahlenbündel einer Strahlung (7) vom Typ Laser emittiert, das zu einem Teil der Glasscheibe gerichtet ist, der einen Luminophor umfasst, der die Strahlung absorbiert und ein Licht im sichtbaren Spektralbereich reemittiert, wobei die Beleuchtung des Teils durch das Strahlenbündel die Anzeige eine reellen Bildes auf der Glasscheibe ermöglicht, wobei die Quelle in dem Fahrgastraum durch Anwendung des Verfahrens nach einem der vorhergehenden Ansprüche positioniert wird.

## Claims

1. Method of using a device for displaying a real image on glazing (1), fitted in a passenger compartment, said device comprising a source (4) emitting a beam of radiation (7) of the visible UV or IR laser type or of the light-emitting diode type, directed towards a portion of said glazing comprising a fluorescent material absorbing said radiation and re-emitting light in the visible region, the illumination of said portion by the beam enabling the image to be displayed on the glazing, said method being **characterized in that** it comprises the following steps:
- the set of positions i_{[1;n]} where the source can be located in the passenger compartment is identified,
- from a first position i₁ of the source in the passenger compartment, a polarized incident beam is emitted in such a way that its electromagnetic field is transverse magnetic,
- for the whole portion of the glazing illuminated by the beam, the variations of the angle of incidence θ₁ are measured, and a value of the angle θ_{1(Rmax)} is determined for which the reflection R₁ₘₐₓ of the incident radiation by the glazing is maximal in said illuminated area and for the source location i₁,
- from a second location i₂ of the source whose radiation is directed to illuminate substantival the same portion of said glazing, the same procedure as that of the two preceding steps is followed, so as to determine a value θ_{2(Rmax)} for which the reflection R₂ₘₐₓ of the incident radiation by the glazing is maximal in said illuminated area and for the source location i₂,
- the same procedure is followed for all the possible source locations in,
- the source is finally located in the position i for which the value Rᵢₘₐₓ determined in this way is minimal.

2. Method according to Claim 1, in which the source generates a visible UV laser radiation in the range from 380 to 410 nm.

3. Method according to either of Claims 1 and 2, in which the source is a device generating UV laser radiation over an angular half-width γ_{1/2} in the range from 5° to 25°, or preferably from 10° to 20°, serving to illuminate the portion of the glazing used for the display of the image.

4. Method according to any of the preceding claims, in which the device is chosen from the group composed of: projectors based on a MEMS micromirror with a laser source, projectors based on DLP, LCD or LCoS matrices with a laser or LED source, and projectors based on galvanometer-mounted mirrors reflecting a laser source.

5. Method according to any of the preceding claims, in which said glazing (1) is a laminated glazing such as a vehicle windscreen or glazing for a building, comprising an assembly of at least two transparent sheets of inorganic glass (2, 9) or strong organic material, joined together by an interlayer (3) of a thermoformable material or by multilayer sheets incorporating an interlayer of this type, said glazing being **characterized in that** a fluorescent material is integrated into said interlayer, permitting said display.

6. Method according to any of the preceding claims, in which the thermoformable material forming said interlayer is chosen from the group composed of PVBs, plasticized PVCs, polyurethane (PU) and ethylene vinyl acetates (EVA).

7. Method according to any of the preceding claims, in which said fluorescent material is a hydroxyalkyl terephthalate R-OOC-Φ(OH)ₓ-COOR, having the structural formula: 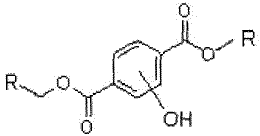 in which φ denotes a benzene ring substituted by at least one hydroxy group (OH), R is a hydrocarbonated chain comprising 1 to 10 atoms and x is equal to 1 or 2.

8. Method according to the preceding claim, in which said fluorescent material is diethyl-2,5-dihydroxyterephthalate.

9. Passenger compartment comprising a device for displaying a real image on glazing, said device comprising a source (4) emitting a beam (7) of a concentrated directional radiation of the laser type directed towards a portion of said glazing comprising a fluorescent material absorbing said radiation and re-emitting light in the visible region, the illumination of said portion by the beam permitting the display of a real image on said glazing, in which said source is positioned in the passenger compartment by the use of the method according to any of the preceding claims.
